# EUROPEAN PATENT SPECIFICATION

(11) **EP 1 322 094 B1**
(45) Date of publication and mention of the grant of the patent: **06.04.2005**
(21) Application number: 01403337.7
(22) Date of filing: 21.12.2001
(51) Int. Cl.: H04L 29/08, H04L 29/06

(54) **Process for selecting a server in a content delivery network**
Verfahren zur Server-Auswahl in einem Inhaltsauslieferungsnetzwerk
Méthode pour sélectionner un serveur dans un réseau de fourniture de contenu

(43) Date of publication of application: 25.06.2003
(73) Proprietor: Castify Networks SA, 06400 Valbonne - Sophia Antipolis (FR)
(72) Inventor: Legout, Arnaud, 06600 Antibes (FR); Anliker, Lukas, 06110 Le Cannet (FR); Hummes, Jakob, 06160 Juan les Pins (FR)
(74) Representative: Cabinet Hirsch

(56) References cited:
- EP-A- 0 817 444
- WO-A-00/57598
- US-A- 5 968 121

## Description

The invention relates to the field of networks, and more specifically to content delivery networks.

The World Wide Web (Web) uses the stateless hypertext transfer protocol (HTTP) to allow a client to request resources from a server over a network. The HTTP protocol enables the transparent navigation from Web servers to Web servers through hypertext links. A hypertext link makes an association between a part of text and a URL (Uniform Resource Locator). A resource itself can contain multiple resource locators. A Web browser that runs on the machine of the client sends a HTTP GET message to a Web server running on the machine of the server. The address of the resource on the server is determined by a Uniform Resource Locator (URL) from the form "<protocol>://<server-address>/<path>/<content>". URLs with other protocols than HTTP are typically served by specialized servers (such as FTP servers, streaming media servers, etc.). The protocol HTTP is a client-server protocol, which uses a TCP network connection. How the data is interpreted by the browser depends on the MIME type of the returned data; other protocols than HTTP are usually handled by plug-ins that are called by the browser.

Resources that are heavyweight in relation to text based resources, such as images, audio, video, and large files, can place a burden for the server, especially if they are often requested. Content Delivery Networks (CDN) replicate resources to distribute the load to multiple surrogate servers; a CDN thus comprises a number of surrogate servers, in which resources are replicated, and a redirection server for managing, upon request of a user, which of the surrogate servers should deliver the resources.

The main difference between known CDN techniques is their mechanism to choose the surrogate server that serves the resource. US-B-6 185 598 suggests providing reflector mechanisms for intercepting resource requests made by clients and selectively reflecting the requests to repeaters. The reflectors select a best repeater from a set of possible repeaters and redirect the client to the selected best repeater. The client then makes the request to the selected best repeater. For selecting the best repeater, the network is partitioned into cost groups; according to the user, a set of "low cost" repeaters is selected, and one repeater is selected at random among the set. If the requested resource is not in the selected repeater, the repeater copies it from the origin server, and saves a local copy of the resource in order to serve subsequent requests.

US-A-6 108 703 discusses a network architecture for a content provider, having a content provider site and a number of ghost servers. It suggests serving a base HTML portion of a web page from the content provider site, and serving the embedded objects for the page from the ghost servers located near to the client machine. This document suggests balancing load among ghost servers. Replication of objects from the content provider site to the ghost servers is carried out in a demand-based pull fashion : if a copy of a requested object is not present on the ghost server located near to the user, the ghost server retrieves a copy of the object from the content provider site or from another ghost server. Apart from this process for replicating resources, the described method uses dynamic DNS redirection to select a surrogate server close to the end-user. The main disadvantage of DNS redirection is that the result might not be accurate for the requester, since the DNS server used by the end-user's browser is not close to the end-user. Moreover, with dynamic DNS it is not possible to get the context of the end-user.

US-A-6 052 718 discusses replica routing, that is automatically redirecting client computers that request a service to a server replica for this service. The server replica selected is the one expected to provide the best performance to the client, based upon the client's location in the internetwork topology and the estimated performance of the internetwork. The described method uses real-time measurements, when an end-user requests a resource to calculate the nearest replica server. The end-user's browser is redirected by a replica router to the replica server by receiving from the described method an HTTP REDIRECT answer. Thus the end- user's browser has to connect first to the replica router and then a second time to the replica server. This may cause unnecessary latency. This document further suggests that server replicas contain the same basic information, but be specialized with local features, e.g. language features or buyer-location specific prices. In this case, the server replica is not selected according to the request of the client or according to the nature of the resource, but rather according to the geographical area, so that client routing is based on content specialization, but not on proximity.

US-A-6 003 030 suggests replicating information among "smart mirror" sites. Every user is assigned to a specific delivery site based on an analysis of network performance with respect to each of the available delivery sites. The described method relies on special software that is installed at the end-user terminal, to choose the best surrogate server. This document does not specifically discuss the content of the "smart mirror" sites, the implicit assumption being that all mirror sites of the same content provider contain the same information.

US-A-5 870 546 discusses redirection methods. These are used for tracking of a client reference to a resource locator. However, this document does not discuss how redirection methods could be applied to content delivery networks, or to the selection of a surrogate server in such a CDN.

M. A. Ruiz-Sanchez, Ernst W. Biersack, and Walid Dabbous, *Survey and Taxonomy of IP Address Lookup Algorithms,* IEEE Network Magazine, 15(2):8--23, March/April 2001 discusses the problem of IP addresses lookup. The algorithms disclosed in this document are applied to the routing of IP packets in a router.

WO-A-00 57598 discloses data network load management. This document discusses the architecture of a network communication system with a plurality of servers, in which there is provided a redirector station. The redirector station is arranged to select an optimum server to handle communication of a user device, on the basis of both the physical location relative to the user device and current communication traffic loading. According to the instructions received from the redirector station, the user device re-establishes network communication via the selected server. In this architecture, the client apparently connects to a redirector, and provides the redirector with its location. The redirector determines the server to which the client should be redirected, based on the current load of the servers. There is no discussion whatsoever of the content of the servers, since all servers are deemed equivalent. Thus, this document simply discloses load balancing among identical servers.

EP-A-0 817 444 discusses a system for context-dependent name resolution. A name resolver receives requests from requesters and resolves the intended recipient of the request based upon one or more predetermined criteria, including information about the location of the requester and information on the type of service requested. For each of these criteria, this document provides a number of possible manners for carrying out the resolution. These manners are limited to a list of possible entries; no explanation is given as to the actual resolution. In addition, there is no information as to the way to carry out a possible combination of the various criteria.

US-A-5 968 121 discusses a network directory and naming service. Where communicatively local and remote instances exist for a server, a close replica is selected upon request of a client for accessing a resource. In this document, upon receiving a request of a client for a site, the DNS server calls upon a directory service to locate instances of domain controllers associated with the domain and site identified within the request. Once the DNS directory service returns a list of domain controllers, the domain controllers within the list are pinged for determining the closest one. This solution implies an iterative pinging process on the list of the returned domain controllers, which slows down the lookup process. This document is believed to be the closest prior art to the invention.

In view of this prior art, there is a need for a method for selecting in a content delivery network, the "best" surrogate server for serving requests to users. Such a method should be fast, easy to implement; preferably, it should not necessitate additional software or hardware at the client's side or additional hardware within the network. The method should serve the users as rapidly as possible, and should not cause unnecessary latency.

According to the invention, there is provided a process for selecting, in a content delivery network having at least two surrogate servers delivering content over a network, a surrogate server adapted to deliver content requested by a user, the process comprising the steps of:
- defining at least two subnetworks in the network, and upon request of the user, finding a subnetwork of the user;
- determining the surrogate server closest to the subnetwork of the user;
- checking whether the closest surrogate server has the ability to serve the content requested by the user, and
   - if the closest surrogate server has the ability to serve the content requested by the user, selecting the closest surrogate server;
   - else, if the closest surrogate server does not have the ability to serve the content requested by the user, disregarding the closest possible surrogate server and repeating the step of determining and checking.

In a preferred embodiment, the step of finding a subnetwork is carried out using an algorithm with a time complexity equal to or less than O(W), with W the length of an address in the network.

The step of determining may comprise :
- measuring a distance between each surrogate server and each subnetwork;
- according to the subnetwork of the user, selecting a surrogate server with the smallest distance.

In this case, a distance between a surrogate server and a subnetwork may be selected from:
- a number of hops within the network from the surrogate server and a representative of the subnetwork;
- a round trip time within the network from the surrogate server to a representative of the subnetwork;
- a parameter entered manually or read from a connection table;
- available or bottleneck bandwidth within the network from the surrogate server and a representative of the subnetwork;
- costs to reach a representative of the subnetwork from the surrogate server.

Distances may be stored in a table with a subnetwork identifier as key. In this case, an entry in the table is preferably a list of surrogate servers identifiers, ordered by distance to the subnetwork identified by the key to the entry.

In another embodiment, the step of determining is carried out using an algorithm with a space complexity equal or less than O(N*(S+1)), with N the number of subnetworks and S the number of surrogate servers.

The step of checking may comprise :
- storing for each surrogate server identifiers of the content contained in the surrogate server;
- mapping an identifier of the content requested by the user; and
- comparing the identifier of the content requested by the user and the identifiers of the content contained in the closest surrogate server.

In this case, identifiers may be stored in a table with the content identifier as key. Each entry can be a bit array, one bit in the array being representative of the presence in a surrogate server of the content corresponding to the key to the entry.

According to another embodiment of the invention, the step of checking is carried out using an algorithm with a space complexity equal or less than O(C*S), with C the number of content and S the number of surrogate servers.

Preferably, a request from a user contains an identifier of a set of real contents, each of said real content being contained in the content delivery network; in this case, the process further comprises, before the step of checking, a step of selecting a real content of the set according to the request of the user, and the step of checking comprises checking whether the closest surrogate server has the selected real content. In this case, the step of selecting a real content is preferably carried out according to information related to the user. This user-related information related to the user may be selected among:
- technical characteristics of a device of the user;
- a location of the user;
- past behaviour of the user;
- a subnetwork of the user;
- identity of the user.

Real contents within a set may represent:
- the same content with a different video quality or a different audio quality;
- the same content in different languages;
- advertisements;
- regionalized advertisements,
- personalized advertisements
- independent advertisements.

In another embodiment of the invention, the network comprises a private network, addresses of which are hidden from the rest of the network. The private network contains at least one surrogate server, and the process comprises
- providing a local redirection server within the private network;
- carrying the steps of defining, determining and checking within the local redirection server, and
- if no surrogate server is selected within the private network, repeating the steps of defining, determining and checking within a redirection server of the content delivery network outside of the private network.

In yet another embodiment of the invention, the network comprises a private network, addresses of which are hidden from the rest of the network. The private network contains at least one surrogate server, and the process comprises :
- providing a local redirection server within the private network;
- upon request of the user, having the local redirection server forward an address of the user in the private network to a redirection server of the content delivery network outside of the private network.

The steps of defining, determining and checking may then be carried out in the redirection server outside of the private network.

The invention also proposes a computer program product , as well as a content delivery network with a redirection server and at least one surrogate server, the redirection server comprising computer programs means.

A network embodying the invention will now be described, by way of nonlimiting example, and in reference to the accompanying drawings, where :
- figure 1 is a flowchart of the steps of a process according to an embodiment of the invention;
- figure 2 is a description of the invention in terms of input and output of information;
- figure 3 is a flowchart of the meta-content lookup process in one embodiment of the invention;
- figure 4 is an example of a table used for selecting a surrogate server closest to a subnetwork, in one embodiment of the invention;
- figure 5 is an example of a table used for checking whether a surrogate server has a selected content, in one embodiment of the invention;
- figure 6 is a schematic view of a network architecture where the invention may be carried out;
- figure 7 shows the structure of an object in an embodiment of the invention;
- figure 8 is an example of meta-content identification in an embodiment of the invention;
- figures 9 to 11 show objects in one embodiment of the invention.

The invention proposes a method for selecting a surrogate server, in a content delivery network. It is intended to select the "optimal" surrogate server for the requested resource, for a request from a given user (or client). The word "optimal" reflects the capacity of the CDN to provide the requested resource to the user, as fast and as conveniently as possible for the user and, in the case of streams, as uninterrupted as possible.

In the rest of the description, the invention is discussed in reference to an embodiment of the invention on the Internet, which also incorporates means to adapt the content for each viewer following given rules. This makes it possible to deliver different contents to different users although they may have issued a request for the same resource. As shown in the examples below, the contents may differ according to various criteria, such as location of the user in the network, past behaviour of the user, subnetwork of the user, identity of the user or the technical characteristics of the device of the user, including speed of the device used by the user for connecting to the network or display device capabilities of the end user. This is however not a compulsory feature of the invention, and selection of a surrogate server may be carried out without embodying this feature. For the sake of brevity, this feature is included in the description of the embodiments.

For a full understanding of this feature, use is made of the word "meta-content". A meta-content is an identifier of a set of "real" contents, that is of contents actually provided by the CDN. The process does not enforce any constraint on how to group the real contents to obtain a meta-content. The way to group contents depends on the desired functionality. For instance:
- in case of economic broadband, a meta-content could represent a set of content with the same information but with different quality - such as a movie at low, medium, and high quality;
- in case of an enterprise, a meta-content could represent different news of the day depending of the department the user is affiliated with;
- in case of advertisement insertion, the meta-content represents a set of advertisements.

The idea behind the notion of meta-content is that whereas only one URL needs to be maintained (one URL per meta-content), an end user can receive different content through this URL depending on a policy defined by the media manager. This policy depends on information regarding the user. For instance, in the case of economic broadband, the real content delivered to the end user may depend on the speed of the device through which the user connects to the network. In the case of advertisement insertion, the advertisement served on the user would depend on the past behaviour of the user, as discussed below in the example of a carrousel of advertisements.

As explained below, due to its highly modular structure, the invention allows for customization; thus the invention allows the support of various business models. The invention can be used to redirect to any resources a CDN might support, but is very well suited to support CDNs for streaming media. Streaming media are resources that are not downloaded to the end-user, but that are transmitted continuously from the server to the client until the resource was fully streamed or the viewer stops the receiving player. Streaming media is especially sensitive to interruptions through network congestion and packet losses. Streaming the media from the closest surrogate server minimizes the risks of loosing packets and of network congestion on the path of the streaming media packets.

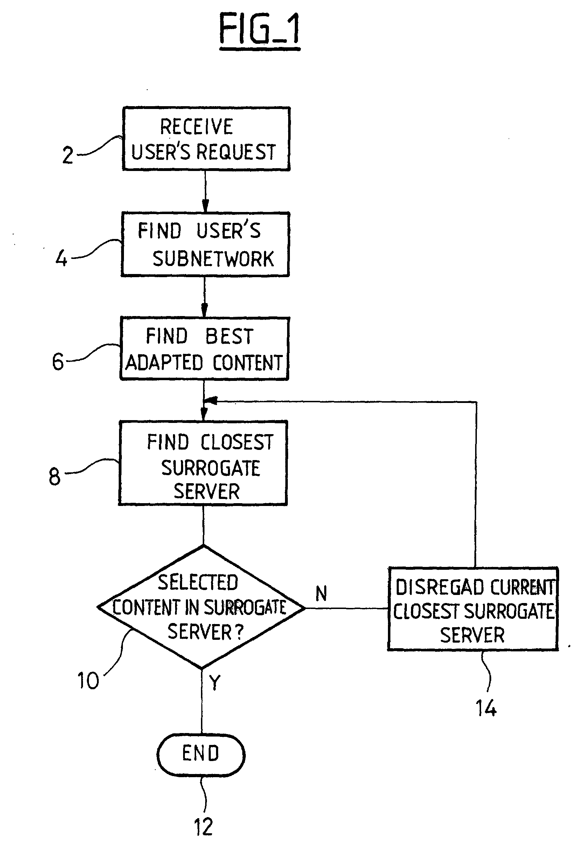

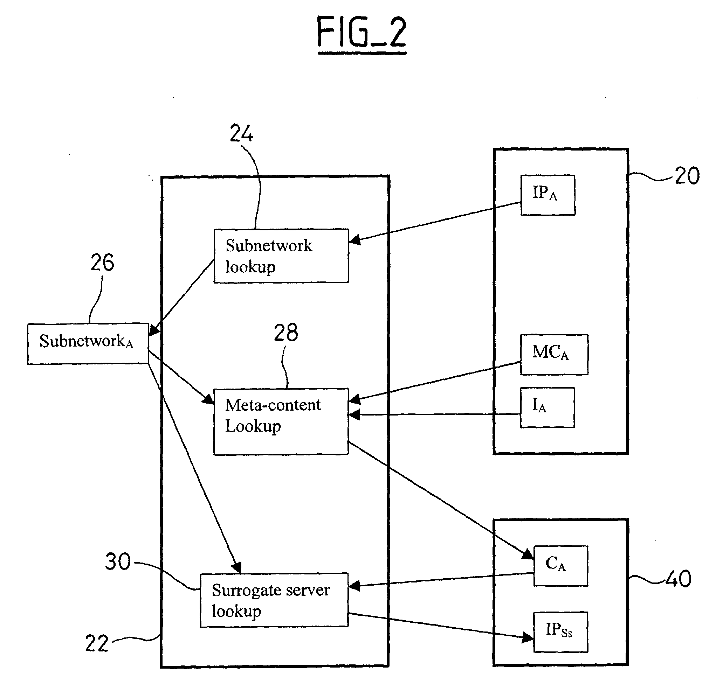

Figure 1 is a flowchart of the steps of a process according to an embodiment of the invention. Figure 2 is a description of the invention in terms of input and output of information. The method is carried out upon receiving a request from a user. As discussed, it is assumed that this request is issued for a meta-content, which identifies a set of real content.

The request is issued by the user simply by selecting one URL for a given meta-content. When an end user click on this URL, the redirection server of the CDN is provided with the information displayed in box 20 of figure 2, that is
- IP_{A}, IP address of the end user A;
- MC_{A}, meta-content requested by user A;
- I_{A}, information on the user A.

This is shown in step 2 of figure 2, where the redirection server receives the information from the user. It is also exemplified in figure 2 by the various arrows going from box 20 to box 22, which symbolizes the redirection server.

Based on the information thus received, in a first step of the process, represented at 4 in figure 1 or at 24 in figure 2, is the finding of a subnetwork of the user. A subnetwork is defined in the present description as one element of a partition of the network; one may simply define a subnetwork as a set of IP addresses. The set of IP addresses can be aggregated into intervals if the subnetwork owns all IP addresses within this interval. This aggregation is important within the Internet to keep the routing tables small. The most often used aggregation is the CIDR format, see M. A. Ruiz-Sanchez et al. for details. The algorithm for finding a subnetwork in this step is discussed at length below. After this step, there is provided a subnetwork identifier, representative of the subnetwork to which the user belongs. In the example, the subnetwork is referenced Subnetwork_{A} in figure 2 in box 26. The arrow in figure 2 from box 24 to box 26 simply indicates that the subnetwork is identified in the first step.

Once the subnetwork is identified, the process proceeds to step 6 of figure 2, where there is selected a content among the set of real content identified by meta content MC_{A}. This step is represented in box 28 of figure 2. Once again, this step could be skipped, if the user issues a request to a given content.

Selection of a content is discussed below in reference to the examples; it is sufficient here to clarify that the selection may depend on various information. As shown by the arrow joining MC_{A} to box 28, selection of the content will first depend on the requested meta-content, which identifies the set of possible contents. Second, selection of the content may depend on information received from the end-user, as shown by the arrow joining I_{A} to box 28 in figure 2. Last, selection of the content may also depend on the location of the user in the network; one easy way to take this into account is to consider the subnetwork to which the user belongs. This is symbolized in figure 2 by the arrow joining boxes 26 and 28. After this step, there is provided a specific content, which is actually stored in at least one surrogate server of the CDN. This specific content is the "best" adapted content for the user, in the sense of the rules defined by the media manager in the CDN. It is referred to in figure 2 as C_{A}, and is represented in box 40, which contains the output from the redirection server.

The process then passes to step 8 of figure 1, box 30 of figure 2. In this step, the surrogate server closest to the subnetwork is determined. The "closest" server is defined in terms of the network topology, and in the sense of the metric used to measure the distance between surrogate servers and the subnetwork to which the end users belong. Examples of distances comprise :
- a number of hops within the network from the surrogate server and a representative of the subnetwork;
- a round trip time within the network from the surrogate server to a representative of the subnetwork;
- a parameter entered manually or read from a connection table;
- network capacities within the network from the surrogate server and a representative of the subnetwork;
- costs to reach a representative of the subnetwork from the surrogate server.

The representative of the subnetwork may simply be one node of the subnetwork. It is preferably selected so that the distance (as defined above) from the outside to the representative is more or less the mean distance from the outside to all members of the subnetwork.

Algorithms for determining the closest surrogate server are discussed below. As exemplified by the arrow joining box 26 and box 30 in figure 2, the input in this step is mainly the identifier of the subnetwork. After this step, there is provided a current closest surrogate server.

In the next step 10, it is checked whether the current closest surrogate server has the ability to serve the content requested by the user. In case one does not use meta-content, this step amounts to checking whether the current closest surrogate server has the content actually requested by the user. Otherwise, where one uses meta-content, this step amounts to checking whether the current closest surrogate server has the actual content C_{A} selected in step 6, and is available for serving this content. This is shown in figure 2 by the arrow joining C_{A} to box 30. Algorithms for carrying out this step are discussed below.

If the answer in step 10 is "yes", then the current closest surrogate server has the relevant real content C_{A} and may accept the client request; the process is terminated (step 12). In figure 2, this is represented by the output of IP_{Ss}, that is by the output of the IP address of the optimal surrogate server. One should note that the selected surrogate server is also the closest possible one, in the sense of the distance used in the process.

Otherwise, if this current closest surrogate server cannot serve the actual content C_{A}, the process passes to step 14. In step 14, the current closest surrogate server is disregarded, and the process passes back to step 8. This means that step 8 will provide the next closest surrogate server - in terms of the distance used in the process.

Thus, the method terminates when a surrogate server is found; although this is not represented in figure 1, the method would also terminate if no more surrogate servers exist within the CDN, or if there is no surrogate server that is able to serve the best adapted real content.

In the description of step 10, it is checked whether the surrogate server has the content requested by the user, and whether it is available for serving this content; one may also carry out the checking of availability of the server separately, or simply not check the availability of the server. The advantage in checking separately the availability of the surrogate server is that this availability may change often, while the content of the surrogate server is likely to be more stable. It is also possible that the server be available, but that restrictions exist regarding maximum bandwidth usage; this could also be construed as checking the "availability" of the surrogate server.

Again, one should understand from the consideration of figures 1 and 2 that the proposed method would also operate even if the user did not issue a request for a meta-content, but simply a request for a specific "real" content actually contained in the CDN. In such a case, step 6 of figure 1 would simply be skipped.

The various possible algorithms usable in these steps are now discussed. Since the method is aimed to be executed for each request for a content that is managed by the CDN the calculation must be as fast as possible. The algorithms for each step may be optimized to run entirely in main memory of a standard PC. Moreover, the algorithms now discussed are fast and only require a few memory lookups. While the preferred embodiment runs on a single computer, the four steps can also be deployed on different computers connected over a network to handle more requests in parallel.

The following four algorithms may be used to calculate the best adapted real content, and the address of the closest surrogate server to the requesting end user, which has this real content. The algorithms may work on data that is read in at initialization time. The data is stored by each algorithm in data structures that allow efficient lookups and efficient updates within the main memory, as discussed below.

At initialization, the following data is provided :
- a list of subnetworks and a unique identifier for each subnetwork; as discussed above, subnetworks may be defined as IP address ranges. This list can be obtained e.g. from the routing tables of border Internet routers or route registries, or set by the network provider;
- a matrix that contains for each meta-content the list of the real contents associated to it, and the type of the object that will store the real contents and that will define the rules for the choice of the best adapted real content;
- a matrix that assigns for each deployed surrogate server a weight to reach the subnetwork. The weight can be e.g. the distance in hops from the surrogate server to a representing computer of the subnetwork, or another of the distances discussed above;
- a matrix that contains for each surrogate server all content identifiers for the content that is accessible by the surrogate server;
- a table that stores the current state of each surrogate server within the content delivery network; this table, when available, makes it possible to take into account the current status of the surrogate servers, and provides fail safe capabilities.

The data can be stored in an external database that is read by the algorithms of the invented method at initializing time; it may be stored in different places if the four algorithms are carried out in different places. If the state in the content delivery system changes, the internal data may be changed accordingly. As example, the following state changes, within the CDN, may result in a update of the data: insertion, changes to, deletion of new content; failing of a surrogate server, changes in the list of subnetworks, changes in the weights for a surrogate server to reach a subnetwork.

The following data structures are created by the invented method, in its preferred embodiment, according to the initial data:
- a binary tree is used to store the subnetworks information in order to perform route lookups, or any other data structure as proposed in M.A. Ruiz Sanchez et al.;
- a table, preferably a hash table, which keys are the meta-content identifiers and which values are the object corresponding to the meta-content. Each object contains a set of real contents and rules to chose which real content is best adapted for which end user;
- a table, preferably a hash table which keys are the subnetwork identifiers, and the values are ordered lists of all the surrogate servers, from the closest surrogate server for this subnetwork to the farthest surrogate server for this subnetwork;
- a table, preferably a hash table which keys are the real content id, and which values are the bit array. The n^{th} bit set to 1 means that the surrogate server with id n is healthy and can serve the content. The n^{th} bit set to 0 means that the surrogate server with id n cannot serve the content.

Based on the data thus stored, the preferred embodiment of the four algorithms is described below. They make it possible to select the best-adapted real content and the optimal surrogate server, for the requester, which has this real content.

As discussed above in step 4, the first algorithm researches the smallest subnetwork of IP addresses from all subnets stored in a database. The problem of finding the smallest subnetwork is identical to finding the best matching prefix of a subnet within IP address lookup algorithms used within IP routers. See M.A. Ruiz Sanchez et al. for a survey and taxonomy of known IP address lookup algorithms. The input of the first algorithm is the IP address of the end-user's computer (or its gateway, if the computer is within a private network, as in enterprises for example). In the preferred embodiment, the subnetworks are stored in the CIDR notation in a database and uniquely enumerated and loaded at initialization time into the data structure needed by the first algorithm. In the preferred embodiment, we choose the binary tree algorithm, which is the most basic algorithm. Faster algorithms like binary search on prefix length could be taken instead, see M.A. Ruiz Sanchez et al. for different algorithms. Typical routing databases (such as the route table of a backbone router) can be stored with the discussed algorithms in main memory; the size of a binary tree in memory is in O(NW) in the worst case, where N is the number of given subnetworks and W is the length of the longest prefix (32 in Ipv4). A typical number for N is about 100,000 entries. The exact size of the structure highly depends on the given subnetworks and their prefix length. In the worst case, finding a subnetwork within this structure has a time complexity in O(W).

As discussed above, the output of the first algorithm is the number or identifier of the smallest subnetwork in which the IP address of the end-user's computer resides. One may also use algorithms other than the one discussed above.

As discussed above in step 6, a real content may be selected, in case the user's request only issues a meta-content - an identifier to a set of real contents. The algorithm carried out in this step returns the real content id according to the meta-content id and to information related to the end user. This algorithm takes as input the meta-content id, and additional information on the end user, as discussed in relation to figure 2. The output is the real content id.

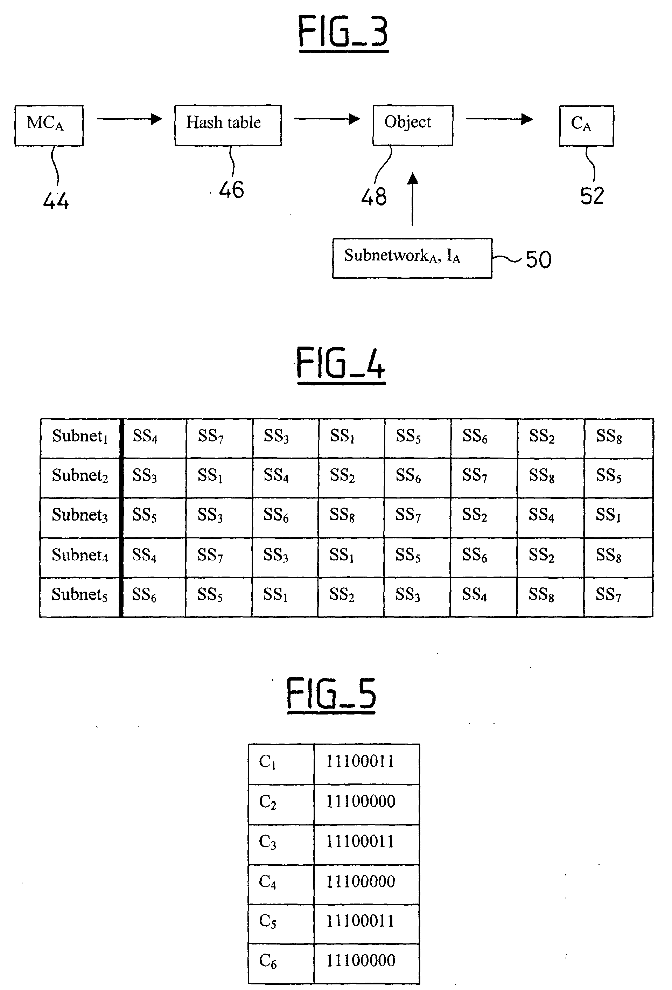

In the preferred embodiment, this algorithm works on a data structure that is a table, preferably a hashtable with the meta-content id as key and a set of objects containing for a given meta-content a set of real content as values. A lookup operation in a hashtable has constant time complexity. Figure 3 shows the meta-content lookup process. This lookup process remains very general and the specific part in the meta-content lookup to each problem is contained in the object definition. Indeed, each object is a small data structure containing all the possible real contents corresponding to the given meta-content. The exact structure of this object depends on the functionality required. We give below several examples of such objects for economic broadband and for advertisement insertion. Each time there is a new problem that requires a mapping of a meta-content to several real contents, a new meta-content object can be created. Figure 3 shows at 44 the input to the algorithm, that is the meta-content identifier MC_{A}. It is used as an entry to the hash table 46, and this return an object real content 48. Based on the information 50 regarding the user - exemplified by I_{A} and the subnetwork identifier, as in figure 3 - the real content C_{A} 52 is provided.

The size in memory of the meta-content table is in O(M), where M is the number of meta-content entries. The lookup speed in this meta-content table is in O(1). As this table simply maps a meta-content id to an object, there are additional memory space and lookup speed requirements depending on the object type. The invention is not restricted to any kind of object.

As discussed in numerous instances above, in case a content does not require a meta-content lookup, this content will be mapped to the identity object, i.e. the object that returns for each meta-content, one and only one real content.

As discussed above in step 8, the process then selects the closest - in terms of the underlying topology and the selected distance - surrogate server to the subnetwork found by the algorithm of step 4. This algorithm knows the distances between all surrogate servers and the subnetworks in the database. In the preferred embodiment, this algorithm works on a data structure that is a table, preferably a hashtable with the subnetwork identifier as key and an ordered list of surrogate server identifiers as value. The list of surrogate server identifiers is ordered from the smallest to the longest distance between the surrogate servers and this subnetwork. This algorithm returns the first entry of this list when it is first called, the second of the list in a second call, and so on; this makes it possible to implement very easily the loop of steps 8, 10 and 14 of figure 1. The algorithm returns a special entry that denotes that no surrogate is available, if no more entries are available; this makes it possible to interrupt the loop, as discussed above.

An example of such a hash table is given in figure 4, where the first column represents the entry key of the hash table (Subnet), and where each line represents the ordered list of the surrogate server (SS) for the subnetwork on the same line. As an example, for 1000 surrogate servers, 100 000 subnetworks, 2 Bytes id for the surrogate servers identification, and 4 Bytes id for the subnetworks identification, the hash table size is: 100'000 * 1000 * 2 + 100'000 * 4 = 191 MBytes. We note that this table could be easily compressed. Indeed, several subnetworks can have exactly the same position to all the surrogate servers. In figure 4, we see this is the case for Subnet₁ and Subnet₄, both subnetworks have exactly the same position to all the surrogate servers. Therefore, only one entry for both subnetworks is needed. By removing all the duplicate lines in the hash table, and by letting several subnetworks point to the same line, we can significantly reduce the size of the table. To find the closest (or n^{th} closest) surrogate server for a given subnetwork requires one hash table lookup plus one lookup in an array. Both lookup operations have constant time complexity. When a change concerns a subnetwork, the update in this hash table is very efficient and simple, as we simply have to update a line in the hash table. When a surrogate server is added or removed, we need to change all the lines. However, these changes can be made line by line.

The size in memory of this table, used to map the closest surrogate server to the subnetwork of the end user, is in O(N*(S+1)) where N is the number of given subnetworks and S is the number of surrogate servers. Finding the closest surrogate server requires a lookup into the table, using the identifier of the subnetwork as an entry.

A solution for building up the table used in this step is now discussed. First, a distance is selected, as explained above; a measurement method may then be chosen. In the preferred embodiment one may use the method disclosed in European patent application n°01 402 789.0 filed on October 26, 2001 and entitled " A process for measuring distance in a packet network with a plurality of routers"; this method returns the number of hops between the measuring site and the measurement target. The traceroute tool can be used for this purpose, but at the expense of a significant overhead in term of network traffic and time.

For each subnetwork, a representative of this subnetwork is chosen for the measurement. This representative can be chosen according to a database of web servers, or in any other way that returns a valid representative, i.e. responding to the measurement protocol. The representative preferably has, as regards distance, a behaviour similar to the mean behaviour of the members of the subnetwork.

To each surrogate server is sent the list of the representatives of all the known subnetworks. Each time a measurement between a surrogate server and a subnetwork target is completed, the table that gives the distance between each surrogate server and each subnetwork is updated. The measurement process, in this example, is carried out from the surrogate server, since the measurement tool is adapted for use from the point from which distance is measured. Of course, in other instances, e.g. if the distance is a parameter set manually, there would be no need to provide the surrogate servers with the list and to proceed with measurements from the surrogate servers.

When an end user comes from a subnetwork without a valid representative and thus has not yet been measured, the process may choose randomly a surrogate server for this end user, but immediately add this end user as the representative of this subnetwork, and trigger the measurements from the surrogate servers to this representative. This self-learning capability allows for a high relevance of the measurement information and ensures that over time all end users that requests content from this CDN are in measured subnetworks. Still, it does not penalize access to the resource by a new end user.

As discussed above in relation to step 10, the process verifies that the requested content is actually accessible from the closest surrogate server. If the content is not available on this surrogate server, the process goes back to step 8 through step 14, thus choosing the next best surrogate server; if the content is available, the process terminates (step 12) and returns the chosen surrogate server identifier.

In the preferred embodiment, the database holds for all surrogate servers the stored content identifiers. The algorithm loads at initialization time this data from the database and stores it in an internal data structure. One memory efficient implementation for this data structure is a hashtable with the content identifier as key and a bit array as value. For the bit array, it is useful to have the identifiers of the surrogate servers as unique integer values in the range from 1 to the number of deployed surrogate servers. So, the bit on position n denotes whether the surrogate server with the identifier n has the content, the bit is set to 0 if the surrogate server does not have the content, to 1 if it has the content. An example of such a hash table is given in figure 5, where the first column represents the entry key of the hash table (Content id), and where the second column represents the bit array introduced above for the content in the same line. As example, this structure can hold the information which content is on which surrogate server in less than 122 Mbytes for 1,000 surrogate servers and 1,000,000 different content items. The calculation is the following. If we have 1,000 surrogate servers, we need a 1,000 bits bit array, thus 125 Bytes. If we have 1,000,000 different contents, 3 Bytes are enough to identify each content. In summary, the size of this structure is 1'000'000 * (125 + 3) = 122 Mbytes. We note that this table could be easily compressed. Indeed, several content items could be present in the same set of surrogate servers. In figure 5, we see this is the case for contents (C₂, C₄, C₆) and (C₁, C₃, C₅). In this example, for 6 contents we only need 2 entries. By removing all the duplicate bit arrays in the hash table, and by letting several contents point to the same line, we can significantly reduce the size of the table. When a new content is created, only one bit array needs to be added in the content lookup structure. When a surrogate server is added or removed, all the bit arrays must be modified. However, this update can be done line by line.

The size in memory of the table of figure 5 is in O(C*S) where S is the number of surrogate servers and C is the number of real contents. The lookup speed of this algorithm cannot be stated without a modeling of the distribution of the content among the surrogate servers. This lookup speed is empirically shown to be fast - a few number of lookups in the data structures.

To summarize, the overall complexity and memory sizes required for carrying out the process are reduced, and the process may be implemented in a standard PC.

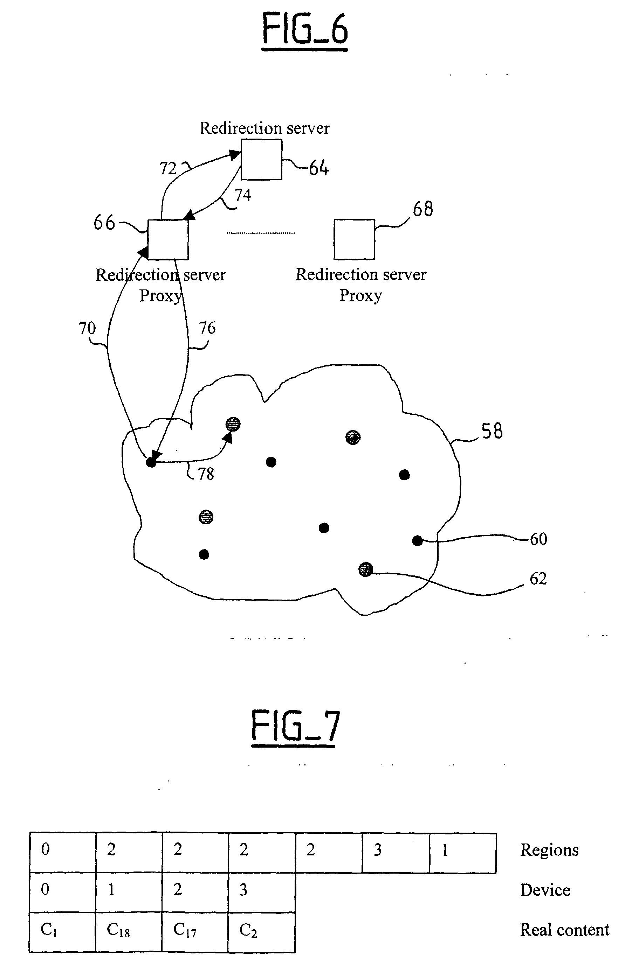

Several examples of use of the process are now discussed. In the preferred embodiment, the invented method is applied to the architecture shown in figure 6. It shows the Internet 58, with a number of end users 60 and surrogate servers 62. The CDN further comprises a redirection server 64 and several proxies 66, 68 for the redirection server. All the algorithms described above may be implemented in the redirection server 64. The redirection server proxies 66, 68 aims to increase the number of request per second handled by the system. Indeed, the invented method is able to handle several hundred of thousand of request per seconds on standard PCs, but as the requests are HTTP based, the overhead induced by this protocol could make the number of requests drop down to only some thousands of requests per second. The idea beyond the redirection server proxy is to put the burden of the HTTP request handling in a large number of proxies, and that each proxy asks for the best adapted content and the optimal server that can serve this content to the redirection server with a simple and fast protocol. For instance, a permanent TCP connection can be opened between each proxy and the server, and each request is embedded within a TCP packet. The proxies can also be in charge of finding the information (device speed, profile, etc.) of the requesting end user. This way, all the overhead is pushed to the proxies that can be easily replicated, and the server is dedicated to perform the invented method.

Figure 6 further shows an example of a request of an end user. We first consider that the end user has found a link to a content he wants to receive on a web server (not shown in the figure). So the end user has an HTTP link to a meta-content, which points to the redirection server proxies. In order to maintain only one link in the web page and to distribute the load among all the proxies, and because each proxy has a different IP address, two solutions can be considered :
- a layer 4/7 switch can be configured in front of the redirection server proxies in order to load balance all the requests it receives among the redirection server proxies. Thus, the address put in the HTTP link will the address of the layer 4/7 switch;
- a DNS round robin redirection may be used. In this case, a virtual redirection server hostname must put in the HTTP link, so that during the DNS name resolution of the virtual redirection server hostname, the DNS returns the IP address of one of the redirection sever proxy chosen in a round robin manner.

For the sake of simplicity, we do not represent the layer 4/7 switch or the DNS redirection in figure 6, and simply assume that the HTTP link points to one of the redirection server proxies. The end user sends an HTTP request to the redirection server proxy - step 70 in figure 6: HTTP://redirection_server_proxy_address/meta-content_id. When the proxy receives this request, it extracts the IP address of the end user and the id of the requested meta-content. Additionally, the redirection server proxy can retrieve further information on the profile of the end user. This information can be obtained by several ways :
- it can be included in the HTTP link returned by the web server and extracted by the redirection server proxy;
- it can be collected by the redirection server proxy when the end user sends the request to the redirection server. This information can be retrieved using cookies, or any other way.

Once the redirection server proxy has the IP address of the end user, the meta content id and eventually additional information on the end user (depending on the kind of meta-content lookup expected), the proxy sends a request - step 72 in figure 6 - with the IP address of the end user, the meta-content id and with the additional information on the end user. The redirection server performs the subnetwork lookup, the meta-content lookup, and the surrogate server lookup as specified above, and returns to the proxy - step 74 in figure 6 - the best adapted real content and the optimal surrogate server that can serve this real content. The redirection server proxy returns to the end user - step 76 in figure 6 - an HTTP redirect with the following URL:
HTTP://optimal_surrogate_server_address/best_adapted_real_content_id.
Finally, the end user connects to the optimal surrogate server asking for the best-adapted real content - step 78 in figure 6.

This notion of redirection server proxy allows a feature that we call meta-file generation handling. Let first introduce the notion of meta-file. In order to allow for more complex meta-content management, the notion of meta-file was introduced. A metafile can be as example a HTML document, an ASX file (metafile for Windows Media), a SMIL file (metafiles for RealNetworks), or any other file that contains URLs for meta-contents embedded within other content.

With a URL for a meta-content, an end user will receive only content. With a URL for a meta-file, the end user will receive a set of contents, which allows for complex formatting. For instance, in case the meta-file is an HTML document, each meta-content embedded within this HTML document can be flash animation. In case the meta-file is an ASX file, each meta-content embedded within this ASX file can be music clip.

As an example of request of an end user, let see the example in figure 6 in the case of meta-file handling. The meta-file id is referenced in a URL in a web page that the end user accesses :
HTTP://redirection_server_proxy_address/meta-file_id
The end user sends an HTTP request to the redirection server proxy - step 70 in figure 6 :
HTTP://redirection_server_proxy_address/ meta-file_id
When the proxy receives this request, it downloads from a database a template for this meta-file. The template is similar to the metafile itself except that there are tags to identify where the surrogate server address must be included and tags to give the meta-content id and show where the real content id must be included (in fact as replacement of the meta-content id). The redirection server proxy extracts the IP address of the end user and extracts from this template all the meta-content ids. Additionally, the redirection server proxy can retrieve further information on the profile of the end user.

Once the redirection server proxy has the IP address of the end user, the meta content ids and eventually additional information on the end user (depending on the kind of meta-content lookup expected), the proxy sends one request per meta-content id - step 72 in figure 6 - with the IP address of the end user, the meta-content id and with the additional information on the end user. The redirection server performs the subnetwork lookup, the meta-content lookup, and the surrogate server lookup as specified above, and returns to the proxy - step 74 in figure 6 - the best adapted real content and the optimal surrogate server that can server this real content. Once the redirection server proxy has the best adapted real content id and the optimal surrogate server for each meta-content id, it replaces each tag in the meta-file template with the relevant information and returns the generated meta-file to the end user - step 76 in figure 6. Finally, the end user connects for each real content to the optimal surrogate server, asking for the corresponding best adapted real content, as shown in step 78 in figure 6.

The notion of meta-file has numerous applications. For instance:
- playlist: the meta-file is a list of content to be played. For instance, an end user can click on a link *disco* and he gets a meta-file containing 20 famous disco video clips;
- advertisement insertion: the meta-file contains the meta-content the end user asked for, preceded by a meta-content that is an advertisement. This advertisement can either be static, i.e. the same for all the end user, or dynamic, i.e. changed by the meta-content lookup according to information on the end user.

### Example 1.

The embodiment now discussed exemplifies an object for the Meta-Content Lookup: the Economic broadband Object, which may be used for streaming media. The economic broadband object allows solving the following problems :
- a provider wants to give a higher quality to its clients than to the other clients of other providers;
- a provider does not want do deliver a high quality content to a user far from the closest surrogate server that has this content, because he will experience poor quality due to the distance and will create congestion in the network. Instead the provider wants to send to him a low quality content;
- a provider does not want an end-user with a 56.6Kbit/s modem to receive a stream at 300 Kbit/s.

The object defined reaches the following scalability targets: Millions of contents; Thousands of regions; Four levels of quality for each content (0 is the lowest quality or no access to the content, and 3 is the highest quality); Four types of devices (we do not mean that we cope with only 4 devices, but that all devices can be mapped into four categories). The category 0 can be, for instance, for all the devices with a maximum throughput higher or equal than 28.8Kbit/s. Then, for instance, category 1 could be for all the devices with a maximum throughput higher or equal to 56.6Kbit/s and for all the unknown devices. The category 2 could be for all the devices with a maximum throughput higher or equal to 300Kbit/s, and the category 3 could be for all the devices with a maximum throughput higher or equal to 700Kbit/s. Moreover, we assume that all the contents for device type 1 can also be read by device type 2, and 3; all the contents for device type 2 can also be read by device type 3. This assumption is always verified when an increasing type refers to an increasing bandwidth capacity of the device.

For the economic broadband object, the notion of region may be defined. A region is a set of subnetworks. In the preferred embodiment, the regions are maintained at the level of the structure that stores the subnetwork, in our embodiment the binary tree. At the initialization of the structure, each subnetwork is assigned to a default region. Then, the media manager or CDN manager defines a new region and the new region id is assigned to the corresponding subnetworks. During a route lookup, the route corresponding to the end user IP address is returned, but also the corresponding region id.

The economic broadband object returns the real-content id based on the meta-content id, the device type of the end user, and the region id. The structure of this object is shown in figure 7. This object contains three arrays: The first array is the Region array; the second array is the Device array; the third array is the real content array. We describe the actions performed by the economic broadband object step by step :
- the input of the meta-content lookup when the economic broadband object is called is: the IP address of the end-user IP_{A}, the meta-content id he wants to receive MC_{A}, its device type D_{A}, and the region *R*_{*A*} corresponding to the IP address IP_{A} of the end-user. This device type could be computed by the redirection server proxy when it receives the request from the end-user;
- a lookup in the first array of the object is done. This array contains for each region, the required level of quality for the given meta-content. This lookup returns a 2 bits level of quality, Q_{R}, for the meta-content requested according to the region;
- then, according to the device type a lookup is made in the second array of the object that contains for each device the *highest* possible level of quality. This lookup returns a 2 bits, Q, that is the highest possible level of quality for this meta-content id according to the device of the end-user. If Q_{R} is lower than Q (Q_{R}≤Q), then a last lookup is made (see step 4), otherwise (Q_{R}>Q) the lookup ends here, and the end-user cannot receive the stream. In order to avoid a missing real content in the output of the lookup, which can make the whole meta-file fail due to a wrong URL, a generic real content can be returned. For instance, a real content that contains the message: "Sorry, your device does not handle the encoding rate of the requested content";
- finally, a last lookup is made in the third array of the object. This array contains the real-content id according to each level of quality. This lookup process is the following: Q_{R} gives the column in the array. The lookup on this array returns the real-content id according to the region and to the device. However, in case this content is not available in the surrogate server (for instance, because the only one surrogate server that has this content is down), a generic real content can be returned, in order to avoid a missing real content in the output of the lookup, which can make the a whole meta-file fail due to a wrong URL. For instance, a content that contains the message: "Sorry, the requested content is currently not available".

Now we give an evaluation of this object. The first entry is an array with as many cells as regions, each cell containing a 2 bits flag that gives the quality for this content according to the region. The second entry is an array with four cells, one per category of devices. Each cell contains a 2 bit flag that gives the highest level of quality that this category of device can handle. The third entry is an array with four cells, each cell containing a real-content id according to the level of quality corresponding to this cell. For 3000 regions, and 8 bytes for the meta-content id, the size of this object is: 3 000*2+4*2 + 4*8*8=783 Bytes. For 1 million of meta-contents with economic broadband the size of all the objects will be: 783 MBytes. We note that this table could be easily compressed. Indeed, several objects will have exactly the same region array and the same device array. This correlation is due to the management of the content. It makes no sense to define completely different scenarios for each content. The easiest way to proceed is to define sets of contents that will have exactly the same configuration (i.e. same level of quality, same quality per region, same quality per device). The way to handle the compression is very simple. We define two arrays: a compressed region two-dimensional array, and a compressed device two-dimensional array. When several objects have the same region array, we create a new line in the compressed region two-dimensional array, and we replace the region array in the objects by a pointer that points to the related line in the compressed region two-dimensional array. We do exactly the same for the device array.

To find the real-content id according to the object, the region and, the device requires only 3 lookups in an array (one lookup per entry). We note that the invented object can be restricted to a region only or to a device only lookup.

The general economic broadband object gives a structure that is very flexible and allows for a large variety of configurations. We give simple examples of potential applications. We first note that quality among the real-contents for each meta-content id is uncorrelated. Indeed, in the example of figure 7, we can define C₁ as a 56Kbit/s content, C₁₈ as a 300Kbit/s, C₁₇ as a 700 Kbit/s, and C₂ as a 1.5Mbit/s. But we can also define C₁ as a sorry message at 56Kbit/s, C₁₈ as a 10 seconds trailer at 56Kbit/s, C₁₇ as a 3 minutes trailer at 56 Kbit/s, and C₂ as the full movie at 1.5 Mbit/s. We also see that the quality of each content is independent of the category of the devices. Therefore, the content provider has a total freedom when defining its real-contents, the only one requirement is to define a level of quality for each real-content, which is relative to the other real-contents for the same meta-content id.

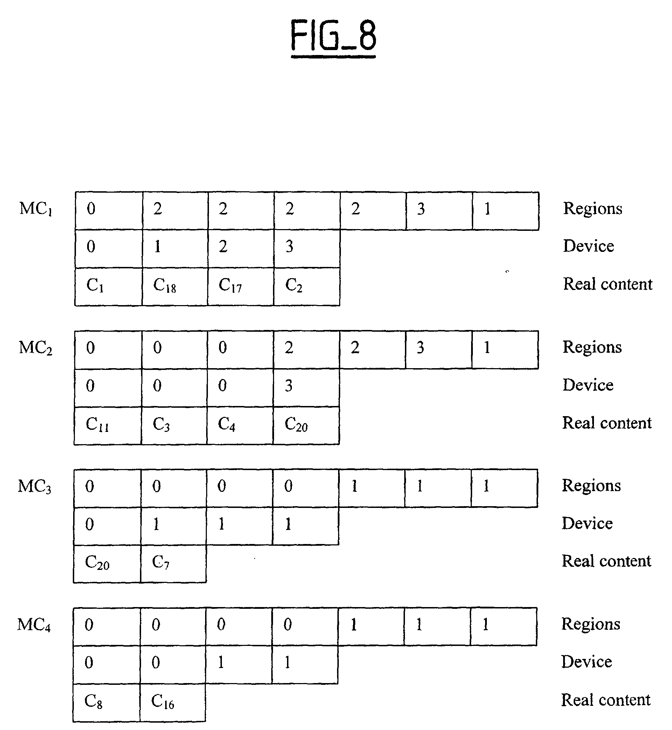

In figure 8, we give an example of configuration for four meta-content ids in case of economic broadband. We assume, for this example, that the four categories of devices are defined as: 0>56Kbit/s, 1>300 Kbit/s, 2>700 Kbit/s, 3>1.5 Mbit/s. We give a description of the configuration for each meta-content id :
- for MC₁, four levels of quality are defined as there are four real-contents (see figure 8). We define C₁ as a 56 Kbit/s content, C₁₈ as a 300 Kbit/s, C₁₇ as a 700 Kbit/s, and C₂ as a 1.5Mbit/s. MC₁ represents the general case,
- for MC₂, four levels of quality are defined as there are four real-contents (see figure 8). We define C₁₁ as a sorry message at 56Kbit/s, C₃ as a 10 second advertisement of a movie at 56Kbit/s, C₄ as a 3 minute advertisement of a movie at 56 Kbit/s, and C₂₀ as the full movie at 1.5 Mbit/s. MC₂ can represent a case where a provider does not want to give a content to end-users that are not in its own network, but wants to advertise for this content outside of its network without using a lot of resources (only short 56 Kbit/s streams);
- for MC₃, two levels of quality are defined (0 and 1). We define C₂₀ as a 28.8 Kbit/s sorry message, and C₇ as a 300 Kbit/s stream. MC₂ can represents a case where a provider does not want to give a content to end-users that are not in its own network;
- for MC₄, two levels of quality are defined (see figure 8). We define C₈ as a 56Kbit/s movie, and C₁₆ as a 700 Kbit/s movie. MC₄ can represents a case where a provider just want to give a high quality stream to its end-user, and a low quality stream to end-users that are not in its own network.

This embodiment makes it possible for the CDN to adapt the media effectively delivered to the user, according to the user information.

### Example 2.

The embodiment now discussed exemplifies an object for the Meta-Content Lookup: the Advertisement insertion Object. These advertisement insertion objects allow solving the following problems :
- a provider wants to add a static advertisement to a content, i.e. an advertisement that will be independent of the location of the end-user.
- a provider wants to add a regionalized advertisement to a content, i.e. an advertisement that depends on the location of the end-user;
- a provider does not want an end-user with a 56.6Kbit/s modem to receive an advertisement encoded at 300 Kbit/s;
- a provider wants to define only one advertisement that maps to a carousel of real advertisements, each real advertisement being served in a round robin manner. This way, when this kind of advertisement is associated to a content, an end-user will not see the same advertisement each time he will request for the content;
- a provider wants to be able to guarantee the number of view or the percentage of view for each advertisement.

The objects defined reaches the following scalability targets: Thousands of ads, each ad corresponding to a different real advertisement for each region (the number of different real advertisement is, if we do not have static advertisements, the number of ads time the number of regions); Thousands of regions; Four types of devices (the explanation of the devices definition is the same as for the economic broadband object).

In the following, we will introduce three objects for the advertisement insertion :
- the regionalized advertisement object;
- the carrousel of advertisement object;
- the per-view billing carrousel of advertisement object.

For the advertisement insertion objects, the notion of region is defined as in the case of the economic broadband object.

The advertisement insertion objects return the real-content id based on the meta-content id, the device type of the end user, and the region id. The input of the meta-content lookup when the advertisement insertion object is called is: the IP address of the end-user IP_{A}, the meta-content id he wants to receive MC_{A}, its device type D_{A}, and the region *R*_{*A*} corresponding to the IP address IP_{A} of the end-user. This device type could be computed by the redirection server proxy when it receives the request from the end-user.

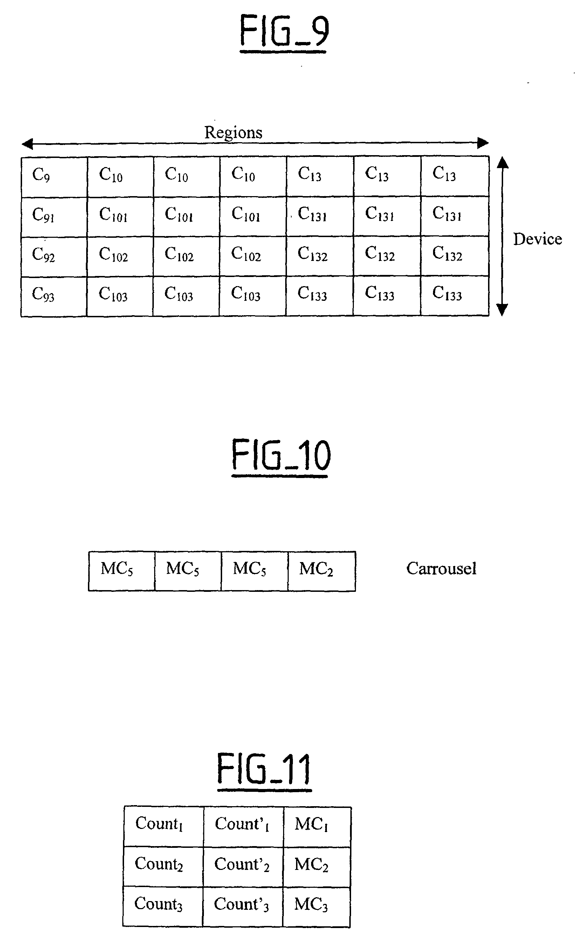

We introduce three objects: figure 9 shows the regionalized advertisement object; figure 10 shows the carousel of advertisement object; figure 11 shows the per-view billing carousel of advertisement object. In the following, we describe step by step the actions performed by each object:
- if the object is a regionalized advertisement object, a lookup in the array structure is done. This array contains for each region and for each device the real-content id. We note that the media provider does not need to specify a different real-content id per region. In figure 9, we see that only 3 real-content ids are specified. However, in case of static advertisement, the meta-content id can simply refer to the identity object. Then, according to the region R_{A} and to the device of the end-user D_{A}, the real-content id is returned;
- if the object is a carrousel of advertisement object (see figure 10), a lookup in the array of the structure is done. This array contains a set of meta-content ids and a pointer pointing to the next meta-content id to be returned. The meta-content id pointed by the pointer is returned. After a carousel lookup, the pointer is shifted on the next meta-content id in the array. If this position is the last in the array, the pointer is shift to the beginning of the array. The meta-content ids for a given carousel are returned with a round robin policy. We note that in an array, changing the distribution of meta-content ids will change the distribution of the number of views for each advertisement. For instance, in figure 10, MC₅ will experience 3/4 of the views whereas MC₂ will experience 1/4 of the views. This property is at no cost for the redirection server and could be exploited by the media manager in order to guarantee a given number or percentage of views to the advertisers. Once the meta-content is returned by the carousel lookup, this meta-content is used for a new meta-content lookup;
- if the object is a per-view billing carousel of advertisements (see figure 11) a lookup in this object is done. Two counters are maintained for each meta-content: The first one allows enforcing some probability of views; the second one sets the maximum number of views for the corresponding advertisement. Imagine that in addition to the above requested number of views, we also want to enforce a given probability of views for each advertisement, let say 50% for MC₁, 30% for MC₂, and 20% for MC₃. *Count*_{*1*} can be set to *5, Count*_{*2*} can be set to 3, and *Count*_{*3*} can be set to 2, as 50, 30, and 20 are multiple of 10. We note that the setting of these counters is done by the media manager according to the request of the advertisers. Then, a pointer is set to the advertisement to be returned. At the initialization, the pointer is set to the first advertisement. When an advertisement is returned, let say MC₁, *Count*_{*1*} and *Count'*_{*1*} are decreased by one. If *Count*_{*1*} reaches 0, the pointer is set to the next advertisement, and *Count*_{*1*} is re-set to its initial value. When *Count'*_{*1*} reaches 0, the corresponding entry is removed from the carousel. With this object, we are able to guarantee a mean probability of views among the advertisements of the same object, and a maximum number of views for each advertisement. We do not further explore this issue. This problem could be further studied in case a client needs for a solution to the per-view billing that cannot be solved by the regular carousel of advertisements.

In case the real content returned by the advertisement insertion object cannot be found in any surrogate servers, a missing real content in the output of the lookup can happen, which can make a whole meta-file fail due to a wrong URL. In order to avoid this problem a generic real content can be returned when the regular lookup failed.

Now, we give an evaluation of the objects introduced :
- the regionalized advertisment object is a 2 dimensional array. Each cell contains the id of a real-content according to the region and to the device. For 10 000 regionalized advertisements, 8 bytes per id, and 1000 regions, the size of this table is: 10 000*4*1000*8 = 320 MBytes. To find the real-content id according to the object, the region, and the device requires only 1 lookup in an array;
- the carousel of advertisement object is an array. Each cell contains the id of a meta-content. For 10 000 carousel, 1000 meta-content ids per carousel, 8 bytes per id, the size of this table is: 10 000*1000*8 = 80 MBytes. When a new meta-content id is added, removed, or modified, the update in this array is very efficient and simple by adding, removing or modifying a cell in an array;
- the per-view carousel of advertisement has properties similar to the carousel of advertisement object except that for each meta-content we add 2 counters, a 1 byte counter for the probability of views, and a 4 bytes counter for the number of views.

The embodiment solves the problems discussed above.

The process also applies where the network comprises a private network, that is a network, the addresses of which are hidden from the rest of the network. This may be the case where the requesting end user is beyond a Network Address Translator (NAT), a proxy, or another network element that hides its IP address. In this case, it is not possible to locate such an end user with a finer granularity than the IP address of the hiding network element. In case several surrogate servers are also beyond the same network element, it is not possible for the redirection server to find the optimal surrogate server. We call a network beyond such a hiding network element a private network. All the addresses inside a private network are only available to other computer inside the same private network. We call the network elements that allow reaching the outside of the private network the private networks interfaces (PNI).

The private IP addresses of all the computers inside the private network are hidden from the outside of this private network. The invented method includes a solution to the problem of the localization of an end user inside a private network based on local redirection servers. This solution also works in case of nested private networks. The key of the solution is to place a local redirection server inside each private network that contains at least one surrogate server. In case a private network does not contain a surrogate server, it does not make sense to place a local redirection server inside it as this private network can be considered as a whole, and all the end users inside this private network will be redirected to the closest - in relation to the PNI - surrogate server outside of the private network. However, in case it makes sense to redirect the end user inside the private network to different surrogate servers outside of the private network, according to the localization of the end user (for instance, when the private network spans over several countries), a local redirection server must be placed inside this private network.

In the preferred embodiment, the solution to use the invention at the same time within and outside private networks uses the following mechanism.

Each time a local redirection server is installed, the subnetwork corresponding to the private IP addresses is declared in the list of subnetworks. As private IP addresses are only unique within the private network, a unique identifier for each private network must be defined in order to avoid collision inside the list of subnetworks. In the preferred embodiment, we choose as unique identifier the IP address of the network element (NAT, gateway, etc.) that defines this private network. The main advantage of this method is that we can concatenate this public IP address with the subnetwork in order to obtain global and unique addresses of all subnetworks, and still use the same subnetwork lookup algorithm. In case there are several PNIs for the same private network, the private subnetwork is declared for all these PNIs.

When the redirection server receives a request from an end user inside a private network, it searches whether there is a local redirection server inside this private network. If there is no local redirection server, the end user localization is the same as for the network element that defines the private network. If there is a local redirection server inside this private network, the redirect server does an HTTP redirect of the end user to the local redirection server; when the local redirection server receives the request from the end user, it searches whether this request comes from a PNI inside its own private network. If this is the case, the local redirection server redirects the end user to the redirection server of the nested subnetwork. This process occurs recursively until a local redirection server finds that the end user comes from its own private network. Then, the local redirection server sends a request to the redirection server with the IP address of the end user. The redirection server finds the best adapted real content and the optimal surrogate server according to the real location of the end user. Then the redirection server returns the meta-file to the local redirection server that forwards this meta-file to the end user.

In an alternative embodiment, the local redirection server within a private network carries out the complete process, and contacts the redirection server outside the private network only in the case, when the requested content is not available on a local surrogate server. This setup assumes that the user makes the initial request to the local redirection server; if the Web page with the URL is hosted outside the private network this is possible by using different local DNS entries for the redirection server that returns for local users the IP address of the local redirection server.

The invention was discussed above, without any specific indication of the practical implementation of the CDN. One may use for implementing the CDN, and notably the redirection servers, any of the solutions known in the art. The algorithms discussed in the various steps of the invention may be carried out in the redirection server, since this is the location where the information is easily available. The redirection server can be placed in a central location of the CDN, but may also be replicated among different locations. An example would be a global CDN with redirection servers on each continent to minimize latencies.. The algorithms may be programmed with known methods, based on the information given above.

The invention has the following advantages over the prior art. As compared with DNS redirection method, the invention offers the following advantages :
- optimal: The accuracy of DNS redirection methods relies on the placement of the local DNS server for each requestor. The DNS server used by a particular end-user may be distant within the network topology from the end-user resulting in wrong assumptions for the redirection engine;
- end-user data: DNS redirection methods do not recognize the end-user or the end-user network; only the DNS server used by the end-user is known. The redirection itself can only redirect the request to a different server. In contrast, the described invention works on the application level and can use all data known from the end-user to formulate the response (and thus include as example different advertising for different end-users). For instance, US-A-60108 703 uses dynamic DNS redirection to select a surrogate server close to the end-user. The main disadvantage of DNS redirection is that the result might not be accurate for the requester, since the DNS server used by the end-user's browser is not close to the end-user. Moreover, with dynamic DNS it is not possible to get the context of the end-user.
As compared with load balancing methods, the invention offers better quality: the goal of load-balancing methods is to distribute end-user requests equally among several servers, thus optimizing the overall resources of the servers. In contrast, the described invention chooses the server that is most likely to deliver the best quality to the end-user over a period of time; the quality criteria is the distance from the server to the end-user. If several replica servers have the same distance to the end-user, the described method load-balances among them.

The invention is also advantageous over traditional HTTP redirection methods: HTTP redirection methods compute the best server to satisfy a given request and respond with an HTTP redirection directive. The end-user's browser then connects to the URL given in the HTTP redirection directive. In contrast to the HTTP redirection methods, this invention responds with the expected file, in which the URLs to the requested contents have been substituted with the URLs to the optimal replica servers.

In addition, contrary to the solution proposed in US-A-6 003 030, the invention does not relies on special software that is installed at the end-user terminal, to chose the best surrogate server.

The present invention can serve directly the best-adapted resource to the end-user, but with replacements for any hyperlinks to other resources to obtain best responses for those embedded resources. There is no need for the user to connect first to the to the replica router and then a second time to the replica server, as discussed in US-A-6 052 718; this avoids unnecessary latency. Contrary to US-B-6 185 598, the invention serves the resource with adapted resource locators depending on the end-user's and service provider's context, without needing to intercept resource requests.

## Claims

1. A process for selecting, in a content delivery network having at least two surrogate servers (62) delivering content over a network, a surrogate server adapted to deliver content requested by a user (60), the process comprising the steps of :
- defining at least two subnetworks in the network, and upon request of the user, finding (4) a subnetwork of the user;
- determining (8) the surrogate server closest to the subnetwork of the user;
- checking (10) whether the closest surrogate server has, from a content point of view, the ability to serve the content requested by the user, and
- if the closest surrogate server has, from a content point of view, the ability to serve the content requested by the user, selecting the closest surrogate server;
- else, if the closest surrogate server does not have, from a content point of view, the ability to serve the content requested by the user, repeating the step of determining and checking while disregarding (14) said previously determined closest possible surrogate server.

2. The process of claim 1, wherein the step of finding a subnetwork is carried out using an algorithm with a time complexity equal to or less than O(W), with W the length of an address in the network.

3. The process of claim 1 or 2, wherein the step of determining comprises
- measuring a distance between each surrogate server and each subnetwork;
- according to the subnetwork of the user, selecting a surrogate server with the smallest distance.

4. The process of claim 3, wherein a distance between a surrogate server and a subnetwork is selected from :
- a number of hops within the network from the surrogate server and a representative of the subnetwork;
- a round trip time within the network from the surrogate server to a representative of the subnetwork;
- a parameter entered manually or read from a connection table;
- available or bottleneck bandwidth within the network from the surrogate server and a representative of the subnetwork;
- costs to reach a representative of the subnetwork from the surrogate server.

5. The process of claim 3 or 4, wherein distances are stored in a table with a subnetwork identifier as key.

6. The process of claim 5, wherein an entry in the table is a list of surrogate servers identifiers, ordered by distance to the subnetwork identified by the key to the entry.

7. The process of one of claims 1 to 6, wherein the step of determining is carried out using an algorithm with a space complexity equal or less than O(N*(S+1)), with N the number of subnetworks and S the number of surrogate servers.

8. The process of one of claims 1 to 7, wherein the step of checking comprises
- storing for each surrogate server identifiers of the content contained in the surrogate server;
- mapping an identifier of the content requested by the user; and
- comparing the identifier of the content requested by the user and the identifiers of the content contained in the closest surrogate server.

9. The process of claim 8, wherein the identifiers are stored in a table with the content identifier as key.

10. The process of claim 9, wherein each entry in the table is a bit array, one bit in the array being representative of the presence in a surrogate server of the content corresponding to the key to the entry.

11. The process of one of claims 1 to 10, wherein the step of checking is carried out using an algorithm with a space complexity equal or less than O(C*S), with C the number of content and S the number of surrogate servers.

12. The process of one of claims 1 to 11, further comprising a step of changing the state of the content delivery network.

13. The process of claim 12, wherein the step of changing the state of the content delivery network comprises changing a list of subnetworks.

14. The process of claim 12 or 13, wherein the step of changing the state of the content delivery network comprises inserting new content, changing content or deleting content.

15. The process of one of claims 12 to 14, wherein the step of changing the state of the content delivery network comprises adding a new meta-content, removing or modifying a meta-content.

16. The process of one of claims 12 to 15, wherein the step of changing the state of the content delivery network comprises changing the state of the surrogate server, in particular changing the state of a surrogate server following failure of the surrogate server.

17. The process of one of claims 12 to 16, wherein the step of changing the state of the content delivery network comprises adding or removing a surrogate server.

18. The process of one of claims 1 to 17, wherein a request from a user contains an identifier of a set of real contents, each of said real content being contained in the content delivery network, wherein the process further comprises, before the step of checking, a step of selecting a real content of the set according to the request of the user, and wherein the step of checking comprises checking whether the closest surrogate server has the selected real content, a real content being content actually provided by the content delivery network and to be delivered to the end-users.

19. The process of claim 18, wherein the step of selecting a real content is carried out according to information related to the user.

20. The process of claim 19, wherein said information related to the user is selected among:
- technical characteristics of a device of the user;
- a location of the user;
- past behaviour of the user;
- a subnetwork of the user;
- identity of the user.

21. The process of claim 18, 19 or 20, wherein the real contents of the set are representing the same content with a different video quality or a different audio quality.

22. The process of one of claims 18 to 21, wherein the real contents of the set are representing the same content in different languages.

23. The process of claim 18, 19 or 20, wherein the real contents of the set comprise advertisements.

24. The process of claim 22, wherein the real contents of the set comprise regionalized advertisements, personalized advertisements or independent advertisements.

25. The process of one of claims 1 to 24, wherein the network comprises a private network, addresses of which are hidden from the rest of the network, said private network containing at least one surrogate server, the process comprising :
- providing a local redirection server within the private network;
- carrying the steps of defining, determining and checking within the local redirection server, and
- if no surrogate server is selected within the private network, repeating the steps of defining, determining and checking within a redirection server of the content delivery network outside of the private network.

26. The process of one of claims 1 to 25, wherein the network comprises a private network, addresses of which are hidden from the rest of the network, said private network containing at least one surrogate server, the process comprising :
- providing a local redirection server within the private network;
- upon request of the user, having the local redirection server forward an address of the user in the private network to a redirection server of the content delivery network outside of the private network.

27. The process of claim 26, wherein the steps of defining, determining and checking are carried out in the redirection server outside of the private network.

28. A computer program product adapted to carry out the process of one of claims 1 to 27.

29. A content delivery network with a redirection server and at least one surrogate server, the redirection server comprising computer programs means for carrying out the process of one of claims 1 to 27.

## Patentansprüche

1. Verfahren zum Auswählen eines Ersatz-Servers in einem Inhaltübermittlungsnetzwerk, das wenigstens zwei Ersatz-Server (62) zum Übermitteln von Inhalten über ein Netzwerk aufweist, wobei ein Ersatz-Server eingerichtet ist, einen von einem Nutzer (60) angefragten Inhalt zu übermitteln, wobei das Verfahren die Schritte aufweist:
- Definieren von wenigstens zwei Unternetzwerken in dem Netzwerk und, auf Anfrage des Nutzers, Auffinden (4) eines Unternetzwerks des Nutzers;
- Bestimmen (8) des dem Unternetzwerk des Nutzers am nächsten liegenden Ersatz-Servers;
- Prüfen (10), ob der am nächsten liegende Ersatz-Server von einem Inhaltsstandpunkt aus die Fähigkeit hat, den vom Nutzer angefragten Inhalt bereitzustellen, und
- falls der am nächsten liegende Ersatz-Server vom Inhaltsstandpunkt aus die Fähigkeit hat, den vom Nutzer angefragten Inhalt bereitzustellen: Auswählen des am nächsten liegenden Ersatz-Servers;
- falls der am nächsten liegende Ersatz-Server von einem Inhaltsstandpunkt aus nicht die Fähigkeit hat, den vom Nutzer angefragten Inhalt bereitzustellen: Wiederholen des Schrittes des Bestimmens und Prüfens während der zuvor bestimmte am nächsten liegende mögliche Ersatz-Server außer Acht gelassen wird (14).

2. Verfahren nach Anspruch 1, wobei der Schritt zum Auffinden eines Unternetzwerkes unter Nutzung eines Algorithmus mit einem Zeitaufwand ausgeführt wird, der kleiner oder gleich O(W) ist, wobei W die Länge einer Adresse in dem Netzwerk ist.

3. Verfahren gemäß Anspruch 1 oder 2, wobei der Bestimmen-Schritt aufweist:
- Messen eines Abstands zwischen jedem Ersatz-Server und jedem Unternetzwerk;
- Auswählen eines Ersatz-Servers mit dem geringsten Abstand, entsprechend dem Unternetzwerk des Nutzers.

4. Verfahren nach Anspruch 3, wobei ein Abstand zwischen dem Ersatz-Server und einem Unternetzwerk ausgewählt wird nach:
- einer Anzahl von Sprüngen innerhalb des Netzwerks vom Ersatz-Server und einem Repräsentanten des Unternetzwerks;
- einer Umlaufzeit innerhalb des Netzwerks vom Ersatz-Server zum Repräsentanten des Unternetzwerks;
- einem manuell eingegebenen oder einem von einer Verbindungstabelle eingelesenem Parameter;
- einer verfügbaren oder Engpass-Bandbreite innerhalb des Netzwerks vom Ersatz-Server und einem Repräsentanten des Unternetzwerks;
- Kosten, um einen Repräsentanten des Unternetzwerks vom Ersatz-Server aus zu erreichen.

5. Verfahren nach Anspruch 3 oder 4, wobei Abstände in einer Tabelle mit einer Unternetzwerk-Kennung als ein Schlüssel gespeichert werden.

6. Verfahren nach Anspruch 5, wobei ein Eintrag in der Tabelle eine Liste von Ersatz-Server-Kennungen ist, die nach einem Abstand zu dem durch den Schlüssel zum Eintrag identifizierten Unternetzwerk geordnet sind.

7. Verfahren nach einem der Ansprüche 1 bis 6, wobei der Bestimmen-Schritt unter Nutzung eines Algorithmus mit einem Platzaufwand ausgeführt wird, der kleiner oder gleich O(N*(S+1)) ist, wobei N die Anzahl der Unternetzwerke und S die Anzahl der Ersatz-Server ist.

8. Verfahren nach einem der Ansprüche 1 bis 7, wobei der Prüfen-Schritt aufweist:
- Speichern von Kennungen eines in einem Ersatz-Server enthaltenen Inhalts für jeden Ersatz-Server;
- Abbilden einer Kennung des durch einen Nutzer angefragten Inhalts; und
- Vergleichen der Kennung des vom Nutzer angefragten Inhalts mit den Kennungen der Inhalte, die in dem am nächsten liegenden Ersatz-Server enthalten sind.

9. Verfahren nach Anspruch 1, wobei die Kennungen in einer Tabelle mit der Inhalts-Kennung als ein Schlüssel gespeichert sind.

10. Verfahren nach Anspruch 9, wobei jeder Eintrag in der Tabelle ein Bit-Array ist, wobei ein Bit in dem Array für die Präsenz des Inhalts entsprechend dem Schlüssel zum Eintrag in einem Ersatz-Server steht.

11. Verfahren nach einem der Ansprüche 1 bis 10, wobei der Schritt des Prüfens unter Nutzung eines Algorithmus mit einem Platzaufwand ausgeführt wird, der kleiner oder gleich O(C*S) ist, wobei C die Anzahl von Inhalten und S die Anzahl von Ersatz-Servern ist.

12. Verfahren nach einem der Ansprüche 1 bis 11, weiter aufweisend einen Schritt zum Wechseln des Zustands des Inhaltübermittlungsnetzwerks.

13. Verfahren nach Anspruch 12, wobei der Schritt zum Wechseln des Zustands des Inhaltübermittlungsnetzwerks ein Wechseln einer Liste von Unternetzwerken aufweist.

14. Verfahren nach Anspruch 12 oder 13, wobei der Schritt zum Wechseln des Zustands des Inhaltübermittlungsnetzwerks aufweist: Einfügen eines neuen Inhalts, Wechseln eines Inhalts oder Löschen eines Inhalts.

15. Verfahren nach einem der Ansprüche 12 bis 14, wobei der Schritt zum Wechseln des Zustands des Inhaltübermittlungsnetzwerks aufweist: Hinzufügen von neuem Meta-Inhalt, Entfernen oder Modifizieren eines Meta-Inhalts.

16. Verfahren nach einem der Ansprüche 12 bis 15, wobei der Schritt zum Wechseln des Zustands des Inhaltübermittlungsnetzwerks aufweist: Wechseln des Zustands des Ersatz-Servers, insbesondere Wechseln des Zustands eines Ersatz-Servers in Folge eines Versagens des Ersatz-Servers.

17. Verfahren nach einem der Ansprüche 12 bis 16, wobei der Schritt zum Wechseln des Zustands des Inhaltübermittlungsnetzwerks aufweist: Hinzufügen oder Entfernen eines Ersatz-Servers.

18. Verfahren nach einem der Ansprüche 1 bis 17, wobei eine Anfrage eines Nutzers eine Kennung eines Satzes von realen Inhalten enthält, wobei jeder der realen Inhalte in dem Inhaltübermittlungsnetzwerk enthalten ist, wobei das Verfahren aufweist: vor dem Schritt des Prüfens einen Schritt zum Auswählen eines realen Inhalts aus dem Satz entsprechend der Anfrage des Nutzers, und wobei der Schritt des Prüfens aufweist: Prüfen ob der am nächsten liegende Ersatz-Server den ausgewählten realen Inhalt aufweist, wobei ein realer Inhalt ein Inhalt ist, der tatsächlich durch das Inhaltübermittlungsnetzwerk zur Verfügung gestellt wird und an die Endnutzer übermittelt werden soll.

19. Verfahren nach Anspruch 18, wobei der Schritt zum Auswählen eines realen Inhalts entsprechend einer nutzerbezogenen Information ausgeführt wird.

20. Verfahren nach Anspruch 19, wobei die genannte nutzerbezogene Information ausgewählt wird aus:
- technischen Charakteristika einer Einrichtung des Nutzers;
- einem Standort des Nutzers;
- dem vergangenen Verhalten des Nutzers;
- einem Unternetzwerk des Nutzers;
- einer Identität des Nutzers.

21. Verfahren nach Anspruch 18, 19 oder 20, wobei die realen Inhalte des Satzes den gleichen Inhalt mit unterschiedlicher Video-Qualität oder unterschiedlicher Audio-Qualität darstellen.

22. Verfahren nach einem der Ansprüche 18 bis 21, wobei die realen Inhalte des Satzes den gleichen Inhalt in unterschiedlichen Sprachen darstellen.

23. Verfahren nach Anspruch 18, 19 oder 20, wobei die realen Inhalte des Satzes Anzeigen enthalten.

24. Verfahren nach Anspruch 22, wobei die realen Inhalte des Satzes regionalisierte Anzeigen, personalisierte Anzeigen oder unabhängige Anzeigen enthalten.

25. Verfahren nach einem der Ansprüche 1 bis 24, wobei das Netzwerk ein privates Netzwerk aufweist, dessen Adressen gegenüber dem Rest des Netzwerks verdeckt sind, wobei das genannte private Netzwerk wenigstens einen Ersatz-Server enthält, wobei das Verfahren aufweist:
- Bereitstellen eines lokalen Umleitungs-Servers innerhalb des privaten Netzwerks;
- Ausführen der Schritte betreffend das Definieren, Bestimmen und Prüfen innerhalb des lokalen Umleitungs-Servers, und
- falls kein Ersatz-Server innerhalb des privaten Netzwerks ausgewählt ist: Wiederholen der Schritte des Definierens, Bestimmens und Prüfens innerhalb eines Umleitungs-Servers des Inhaltübermittlungsnetzwerks außerhalb des privaten Netzwerks.

26. Verfahren nach einem der Ansprüche 1 bis 25, wobei das Netzwerk ein privates Netzwerk aufweist, dessen Adressen vom Rest des Netzwerks verdeckt sind, wobei das genannte private Netzwerk wenigstens einen Ersatz-Server enthält, wobei das Verfahren aufweist:
- Bereitstellen eines lokalen Umleitungs-Servers innerhalb des privaten Netzwerks;
- auf Anfrage des Nutzers: Veranlassen des lokalen Umleitungs-Servers zum Weiterleiten einer Adresse des Nutzers im privaten Netzwerk an einen Umleitungs-Server des Inhaltübermittlungsnetzwerks außerhalb des privaten Netzwerks.

27. Verfahren nach Anspruch 26, wobei die Schritte des Definierens, Bestimmens und Prüfens im Umleitungs-Server außerhalb des privaten Netzwerks ausgeführt werden.

28. Computerprogrammprodukt, das zum Ausführen des Verfahrens nach einem der Ansprüche 1 bis 27 eingerichtet ist.

29. Inhaltübermittlungsnetzwerk mit einem Umleitungs-Server und wenigstens einem Ersatz-Server, wobei der Umleitungs-Server Computerprogrammmittel zum Ausführen des Verfahrens nach einem der Ansprüche 1 bis 27 aufweist.

## Revendications

1. Un processus de sélection, dans un réseau de distribution de contenu comportant au moins deux serveurs de substitution (62) qui livrent le contenu sur un réseau, d'un serveur de substitution adapté pour livrer le contenu requis par un utilisateur (60), le processus comprenant les étapes consistant à :
- définir au moins deux sous-réseaux dans le réseau et, à la demande de l'utilisateur, localiser (4) un sous-réseau de l'utilisateur ;
- déterminer (8) le serveur de substitution le plus proche du sous-réseau de l'utilisateur ;
- vérifier (10) si le serveur de substitution le plus proche a, du point de vue du contenu, la capacité de fournir le contenu requis par l'utilisateur et
- si le serveur de substitution le plus proche a, du point de vue du contenu, la capacité de fournir le contenu requis par l'utilisateur, choisir le serveur de substitution le plus proche ;
- sinon, si le serveur de substitution le plus proche n'a pas, du point de vue du contenu, la capacité de fournir le contenu requis par l'utilisateur, ignorer (14) ledit serveur de substitution le plus proche déterminé précédemment et répéter l'étape de détermination et de vérification.

2. Le processus selon la revendication 1, dans lequel l'étape de localisation du sous-réseau est exécutée en utilisant un algorithme d'une complexité en temps égale ou inférieure à O(W), W étant la longueur d'une adresse dans le réseau.

3. Le processus selon la revendication 1 ou 2, dans lequel l'étape de détermination comprend :
- la mesure de la distance entre chaque serveur de substitution et chaque sous-réseau
- selon le sous-réseau de l'utilisateur, la sélection d'un serveur de substitution correspondant à la plus petite distance.

4. Le processus selon la revendication 3, dans lequel la distance entre un serveur de substitution et un sous-réseau est sélectionnée depuis :
- un certain nombre de sauts *(hops)* dans le réseau entre le serveur de substitution et un représentant du sous-réseau ;
- le temps d'aller et retour dans le réseau entre le serveur de substitution et un représentant du sous-réseau ;
- un paramètre saisi manuellement ou lu dans une table de connexions ;
- la bande passante disponible ou constituant un goulot d'étranglement dans le réseau entre un serveur de substitution et un représentant du sous-réseau ;
- les coûts nécessaires pour atteindre un représentant du sous-réseau depuis le serveur de substitution.

5. Le processus selon la revendication 3 ou 4, dans lequel les distances sont stockées dans une table avec un identificateur de sous-réseau comme clé.

6. Le processus selon la revendication 5, dans lequel une entrée de la table est une liste d'identificateurs de serveurs de substitution, ordonnés selon la distance vers le sous-réseau identifié par la clé sur l'entrée.

7. Le processus selon l'une des revendications 1 à 6, dans lequel l'étape de détermination est exécutée en utilisant un algorithme ayant une complexité spatiale égale ou inférieure à O(N * (S+1)), N étant le nombre de sous-réseaux et S le nombre de serveurs de substitution.

8. Le processus selon l'une des revendications 1 à 7, dans lequel l'étape de vérification comprend :
- le stockage, pour chaque serveur de substitution, des identificateurs du contenu se trouvant dans le serveur de substitution ;
- le repérage de l'identificateur du contenu requis par l'utilisateur ; et
- la comparaison de l'identificateur du contenu requis par l'utilisateur et des identificateurs du contenu se trouvant dans le serveur de substitution le plus proche.

9. Le processus selon la revendication 8, dans lequel les identificateurs sont stockés dans une table avec un identificateur de contenu comme clé.

10. Le processus selon la revendication 9, dans lequel chaque entrée de la table est une matrice de bits, un bit dans la matrice étant représentatif de la présence dans un serveur de substitution du contenu correspondant à la clé sur l'entrée.

11. Le processus selon l'une des revendications 1 à 10, dans lequel l'étape de vérification est exécutée en utilisant un algorithme d'une complexité spatiale égale ou inférieure à O(C*S), C étant le nombre de contenus et S le nombre de serveurs de substitution.

12. Le processus selon l'une des revendications 1 à 11, comprenant en outre une étape de changement de l'état du réseau de distribution de contenu.

13. Le processus selon la revendication 12, dans lequel l'étape de changement de l'état du réseau de distribution de contenu comprend le changement d'une liste de sous-réseaux.

14. Le processus selon la revendication 12 ou 13, dans lequel l'étape de changement de l'état du réseau de distribution de contenu comprend l'insertion du nouveau contenu, le changement du contenu ou la suppression du contenu.

15. Le processus selon l'une des revendications 12 à 14, dans lequel l'étape de changement de l'état du réseau de distribution de contenu comprend l'ajout d'un nouveau méta-contenu, la suppression ou la modification d'un méta-contenu.

16. Le processus selon l'une des revendications 12 à 15, dans lequel l'étape de changement de l'état du réseau de distribution de contenu comprend le changement de l'état du serveur de substitution, plus particulièrement le changement de l'état d'un serveur de substitution après une défaillance du serveur de substitution.

17. Le processus selon l'une des revendications 12 à 16, dans lequel l'étape de changement de l'état du réseau de distribution de contenu comprend l'ajout ou la suppression d'un serveur de substitution.

18. Le processus selon l'une des revendications 1 à 17, dans lequel une demande d'un utilisateur contient un identificateur d'un ensemble de contenus réels, chacun desdits contenus réels se trouvant dans le réseau de distribution de contenu, le processus comprenant par ailleurs, avant l'étape de vérification, une étape de sélection d'un contenu réel de l'ensemble selon la demande de l'utilisateur, et dans lequel l'étape de vérification consiste à vérifier si le serveur de substitution le plus proche a le contenu réel sélectionné.

19. Le processus selon la revendication 18, dans lequel l'étape de sélection d'un contenu réel est exécutée selon les informations liées à l'utilisateur.

20. Le processus selon la revendication 19, a dans lequel lesdites informations liées à l'utilisateur sont sélectionnées parmi :
- les caractéristiques techniques d'un dispositif de l'utilisateur ;
- un emplacement de l'utilisateur ;
- le comportement passé de l'utilisateur ;
- un sous-réseau de l'utilisateur ;
- l'identité de l'utilisateur.

21. Le processus selon les revendications 18,19 ou 20, dans lequel les contenus réels de l'ensemble représentent le même contenu avec une qualité vidéo différente ou une qualité audio différente.

22. Le processus selon l'une des revendications 18 à 21, dans lequel les contenus réels de l'ensemble représentent le même contenu dans des langues différentes.

23. Le processus selon les revendications 18,19 ou 20, dans lequel les contenus réels de l'ensemble comprennent de la publicité.

24. Le processus selon la revendication 22, dans lequel les contenus réels de l'ensemble comprennent de la publicité régionalisée, de la publicité personnalisée ou de la publicité indépendante.

25. Le processus selon l'une des revendications 1 à 24, dans lequel le réseau comprend un réseau privé, dont les adresses sont cachées du reste du réseau, ledit réseau privé contenant au moins un serveur de substitution, le processus comprenant :
- la fourniture d'un serveur de redirection local dans le réseau privé ;
- l'exécution des étapes de définition, de détermination et de vérification dans le serveur de redirection local, et
- si aucun serveur de substitution n'est sélectionné dans le réseau privé, la répétition des étapes de définition, de détermination et de vérification dans un serveur de redirection du réseau de distribution de contenu à l'extérieur du réseau privé.

26. Le processus selon l'une des revendications 1 à 25, dans lequel le réseau comprend un réseau privé, dont les adresses sont cachées du reste du réseau, ledit réseau privé contenant au moins un serveur de substitution, le processus comprenant:
- la fourniture d'un serveur de redirection local dans le réseau privé ;
- à la demande de l'utilisateur, la demande au serveur de redirection local de transférer une adresse de l'utilisateur dans le réseau privé à un serveur de redirection du réseau de distribution de contenu à l'extérieur du réseau privé.

27. Le processus selon la revendication 26, dans lequel les étapes de définition, de détermination et de vérification sont exécutées dans le serveur de redirection à l'extérieur du réseau privé.

28. Un produit du type programme informatique adapté pour exécuter le processus selon l'une des revendications 1 à 27.

29. Un réseau de distribution de contenu avec un serveur de redirection et au moins un serveur de substitution, le serveur de redirection comprenant des moyens du type programmes informatiques pour exécuter le processus selon l'une des revendications 1 à 27.
